# EUROPÄISCHE PATENTSCHRIFT

(11) **EP 1 207 327 B1**
(45) Veröffentlichungstag und Bekanntmachung des Hinweises auf die Patenterteilung: **08.06.2005**
(21) Anmeldenummer: 01203476.5
(22) Anmeldetag: 14.09.2001
(51) Int. Cl.: F16K 15/04, F24D 19/10, F16K 47/02

(54) **Ventil, insbesondere Heizkörperventil**
Valve, especially radiator valve
Soupape, en particulier soupape de radiateur

(30) Priorität: 18.11.2000 DE 10057357
(43) Veröffentlichungstag der Anmeldung: 22.05.2002
(73) Patentinhaber: Danfoss A/S, 6430 Nordborg (DK)
(72) Erfinder: Larsen, Arne Borge, 8660 Skanderborg (DK); Simson, Peter, 8600 Silkeborg (DK)

(56) Entgegenhaltungen:
- EP-A- 0 264 249
- US-A- 3 008 482
- US-A- 3 683 954
- US-A- 3 828 806

## Beschreibung

Die Erfindung betrifft ein Ventil, insbesondere Heizkörperventil, mit einem Gehäuse, das einen ersten Anschluß und einen zweiten Anschluß aufweist, wobei im Strömungsweg zwischen diesen beiden Anschlüssen eine Absperreinrichtung mit einem Ventilsitz und einem damit zusammenwirkenden Ventilelement angeordnet ist.

Ein derartiges als Heizkörperventil ausgebildetes Ventil ist aus WO 99/22282 bekannt.

Üblicherweise ist bei einem derartigen Heizkörperventil die Durchströmrichtung vorgegeben und mit einem Pfeil auf der Außenseite des Gehäuses markiert. Die Durchströmrichtung sollte beachtet werden, um Störungen zu vermeiden, die sich vor allem durch unangenehme Geräusche bemerkbar machen. Normalerweise ist die ventilsitzseitige Seite der Absperreinrichtung mit dem Einlaßanschluß und die ventilelementseitige Seite der Absperreinrichtung mit dem Auslaßanschluß verbunden. Wenn das Ventilelement auf den Ventilsitz zu bewegt wird, findet eine allmähliche Drosselung des durchströmenden Wassers statt. Bei dieser "korrekten" Betriebsweise ergeben sich normalerweise keine Probleme.

Anders sieht es aus, wenn das Ventil falsch angeschlossen wird, d.h. die Speiseleitung eines Heizungssystem mit dem Auslaßanschluß verbunden wird. In diesem Fall strömt das Wasser über das Ventilelement zum Ventilsitz und von dort in den Einlaßanschluß. Wenn das Ventil schließt, wird das Ventilelement auf den Ventilsitz zu bewegt. Wenn der Spalt zwischen dem Ventilelement und dem Ventilsitz eine gewisse Größe unterschreitet, schließt das Ventilelement schlagartig, was einen ebenso plötzlichen Druckanstieg am Auslaßanschluß zur Folge hat. Dieser Druckanstieg äußert sich in einem Wasserschlag, der nicht nur unangenehme Geräusche zur Folge hat, sondern auch Beschädigungen im Leitungssystem hervorrufen kann. Dieser Wasserschlag kann aber auch durch einen externen Impuls ausgelöst werden, beispielsweise durch ein anderes Ventil, das plötzlich schließt oder öffnet, eine Pumpe, die anläuft oder stoppt, oder anderes. Diese Ursachen, die noch nicht alle restlos geklärt sind, sind besonders kritisch dann, wenn das Ventil falsch montiert ist.

Die Gefahr einer Fehlmontage von Heizkörperventilen ist nicht nur aufgrund von mangelnden Qualifikationen des Montagepersonals gegeben, sondern auch dann, wenn man in älteren Häusern oder Anlagen nicht mehr genau feststellen kann, welche Leitung zum Zufluß und welche zum Abfluß des Heizwassers verwendet wird.

Der Erfindung liegt die Aufgabe zugrunde, ein Ventil unabhängig von der Durchströmrichtung betreiben zu können.

Diese Aufgabe wird bei einem Ventil der eingangs genannten Art dadurch gelöst, daß eine flüssigkeitsbetätigte Richtungsventilanordnung vorgesehen ist, die zufließende Flüssigkeit von der dem Ventilelement abgewandten Seite durch den Ventilsitz leitet.

Bei einem derartigen Ventil ist die Montagerichtung vollkommen unerheblich. Mit anderen Worten, es spielt keine Rolle, ob der Einlaßanschluß oder der Auslaßanschluß des Gehäuses mit der Leitung verbunden wird, durch die die Flüssigkeit zufließt. Der Monteur muß nach erfolgter Montage noch nicht einmal irgendwelche Einstellungen vornehmen. Diese Einstellungen werden vielmehr von der zufließenden Flüssigkeit selbsttätig vorgenommen. Die zufließende Flüssigkeit stellt die Richtungsventilanordnung so ein, daß der Ventilsitz von der dem Ventilelement abgewandten Seite (im folgenden: Rückseite) angeströmt wird, d.h. das Ventilelement wird immer durch den Ventilsitz hindurch angeströmt. Damit ist aber sichergestellt, daß das Ventilelement immer gegen den Druck der zuströmenden Flüssigkeit auf den Ventilsitz abgesenkt werden kann, so daß keine störenden Geräusche, die etwa durch einen Wasserschlag bedingt sind, entstehen. Die Richtungsventilanordnung kann beispielsweise druck- oder strömungsbetätigt sein. Ein mit der automatisch arbeitenden Richtungsventilanordnung ausgerüstetes Ventil ist sozusagen idiotensicher, d.h. es kann auch durch wenig qualifizierte Monteuere montiert werden, was insbesondere beim Heizungsbau erhebliche Vorteile bietet.

Vorzugsweise weist die Richtungsventilanordnung einen ersten Abschnitt in Strömungsrichtung vor dem Ventilsitz und einen zweiten Abschnitt in Strömungsrichtung hinter dem Ventilsitz auf. Man stellt also nicht nur sicher, daß der Ventilsitz von seiner Rückseite, also von der richtigen Richtung her, angeströmt wird. Man stellt auch sicher, daß in Strömungsrichtung hinter dem Ventilsitz eine Ventilsteuerung derart angeordnet ist, die für den "richtigen" Abfluß der Flüssigkeit aus dem Ventil sorgt.

Vorzugsweise weist der erste Abschnitt zwei Eingangskanäle auf, von denen jeder einen Anschluß mit der dem Ventilelement abgewandten Seite des Ventilsitzes verbindet, wobei ein Verschlußelement vorgesehen ist, das unter der Wirkung der Flüssigkeit einen der beiden Eingängskanäle verschließt. Ohne das Verschlußelement wäre das Ventil frei durchströmbar, d.h. die Flüssigkeit könnte von einem Anschluß durch den einen Eingangskanal in den anderen Eingangskanal und von dort zum anderen Anschluß strömen. Zwischen den beiden Eingangskanälen, die an der Rückseite des Ventilsitzes münden, ist allerdings das Verschlußelement angeordnet, das durch die zuströmende Flüssigkeit betätigt wird. Unter Umständen kann auch vorgesehen sein, daß man die abströmende Flüssigkeit zur Steuerung nutzt. Das Verschlußelement versperrt also entweder den einen Eingangskanal, so daß die Flüssigkeit dort nicht abfließen kann, sondern durch den Ventilsitz treten muß, oder es versperrt in entsprechender Weise den anderen Eingangskanal. Da das Verschlußelement von der zuströmenden Flüssigkeit betätigt wird, gibt es automatisch den Eingangskanal frei, durch den die zuströmende Flüssigkeit hindurch tritt.

Vorzugsweise befindet sich das Verschlußelement zumindest vor der ersten Inbetriebnahme in einer Neutralstellung, in der beide Eingangskanäle geöffnet sind. Dies ist sozusagen der Auslieferungszustand des Ventils. Mit dieser Ausgestaltung stellt man sicher, daß das Verschlußelement nicht bereits einen der beiden Eingangskanäle versperrt und dort - aus welchen Gründen auch immer - festsitzt. Man betätigt das Verschlußelement erst dann, wenn das Ventil fertig montiert ist und Flüssigkeit hindurchströmt.

Vorzugsweise ist das Verschlußelement nach der ersten Betätigung in seiner Schließlage festgelegt. Diese Ausgestaltung hat mehrere Vorteile. Es besteht zum einen keine Gefahr, daß das Verschlußelement durch Druckschwankungen oder ähnliche Erscheinungen den an und für sich versperrten Kanal frei gibt. Zum anderen behält es seine definierte Lage, so daß es sich im Gehäuse nicht bewegen und Geräusche verursachen kann. Wenn das Ventil einmal montiert ist, ist eine Richtungsänderung der durchfließenden Flüssigkeit praktisch auszuschließen. Man kann also die Verriegelung nicht nur in Kauf nehmen. Sie ist sogar erwünscht.

Für die Ausbildung des Verschlußelementes gibt es eine Reihe von Möglichkeiten.

In einer ersten bevorzugten Ausgestaltung ist das Verschlußelement als Kugel ausgebildet, die in eine konische Mündung eines der Eingangskanäle klemmbar ist. Wenn das Ventil montiert wird, beispielsweise an einem Heizkörper, dann liegt die Kugel in einem Raum zwischen den Mündungen der beiden Eingangskanäle auf der Rückseite des Ventilsitzes. Wenn das Ventil zum ersten Mal von Flüssigkeit, beispielsweise heißem Wasser, durchströmt wird, dann wird das durch den einen Eingangskanal zufließende Wasser die Kugel in die Mündung des anderen Eingangskanals pressen. Da diese Mündung etwas konisch ausgebildet ist, führt dies zu einem Verklemmen der Kugel in dieser Mündung und damit zu einem Festsitzen. Die Kugel kann also auch bei Druckänderungen, wie sie beispielsweise in einem Heizungssystem gelegentlich auftreten, nicht aus ihrer Position herausbewegt werden.

In einer alternativen Ausgestaltung ist das Verschlußelement als Drehschieber ausgebildet, der einen geschlossenen und einen durchlässigen Wandabschnitt aufweist, wobei der durchlässige Wandabschnitt turbinenschaufelartige Antriebselemente aufweist, die in zwei Abschnitten unterschiedliche Antriebsrichtungen aufweisen und in einer Neutralzone zusammentreffen, die dem geschlossenen Wandabschnitt gegenüberliegt. Vor der Montage des Ventils, also im Auslieferungszustand, ist der Drehschieber so angeordnet, daß die beiden Abschnitte des durchlässigen Wandabschnitts die beiden Mündungen der Eingangskanäle in den Raum auf der Rückseite des Ventilsitzes abdecken. Wenn nun Flüssigkeit einströmt, vorzugsweise bei geöffnetem Ventil, dann wird der Drehschieber verdreht und zwar in eine erste Drehrichtung, die durch die Antriebseinrichtung der turbinenschaufelartig ausgebildeten Antriebselemente bestimmt ist. Diese Drehung setzt sich solange fort, bis die zuströmende Flüssigkeit auf die Antriebselemente trifft, die den Drehschieber in die andere Richtung drehen würden. Da sich dann die Antriebskräfte in beide Drehrichtungen ausgleichen, hört die Drehung des Drehschiebers auf. Die neutrale Zone befindet sich dann etwa in der Mitte der Mündung des Eingangskanales mit der zuströmenden Flüssigkeit. Dementsprechend ist die Mündung des anderen Eingangkanals durch den geschlossenen Wandabschnitt abgedeckt.

In einer dritten Ausgestaltung kann das Verschlußelement als Klappe ausgebildet sein. In diesem Fall ist die Klappe um eine Achse verschwenkbar und so ausgebildet, daß sie sich unter dem Druck der zufließenden Flüssigkeit gegen eine Wand um die Mündung des anderen Eingangkanals anlegen kann.

Vorzugsweise weist der zweite Abschnitt zwei Ausgangskanäle auf, die jeweils eine Ventilkammer auf der dem Ventilelement zugewandten Seite des Ventilsitzes mit einem der beiden Anschlüsse verbinden, wobei in jedem Kanal ein in Richtung des jeweiligen Anschlusses öffnendes Sperrventil angeordnet ist. Damit stellt man sicher, daß über die beiden Ausgangskanäle kein Kurzschluß entstehen kann, wenn das Ventil geschlossen ist. Der Zustrom von Flüssigkeit von dem Anschluß, der mit der zuströmenden Flüssigkeit versorgt wird, zu der Ventilkammer, wird durch das Sperrventil verhindert. Das Sperrventil läßt andererseits einen Flüssigkeitsstrom von der Ventilkammer zum anderen Anschluß zu.

Vorzugsweise ist das Sperrventil als Rückschlagventil ausgebildet. Es sperrt also automatisch, ohne daß weitere Eingriffe erforderlich sind.

Bevorzugterweise weist das Rückschlagventil eine Schließfeder auf. Es schließt also auch dann, wenn kein Differenzdruck vorhanden ist. Dies verbessert die Dichtigkeit.

Auch ist zum Vorteil, wenn das Sperrventil eine Fangeinrichtung für ein Sperrventilelement aufweist. Man verhindert damit, daß das Sperrventilelement in den Flüssigkeitskreislauf gelangt und dort Schäden anrichtet.

Die Erfindung wird im folgenden anhand von bevorzugten Ausführungsbeispielen in Verbindung mit der Zeichnung näher beschrieben. Hierin zeigen:
- Fig. 1: eine schematische Darstellung der Funktionsweise eines Ventils,
- Fig. 2: eine erste Ausgestaltung des Ventils,
- Fig. 3: eine abgewandelte Ausführungsform entsprechend einem Ausschnitt A nach Fig. 2 und
- Fig. 4: eine weitere abgewandelte Ausführungsform.

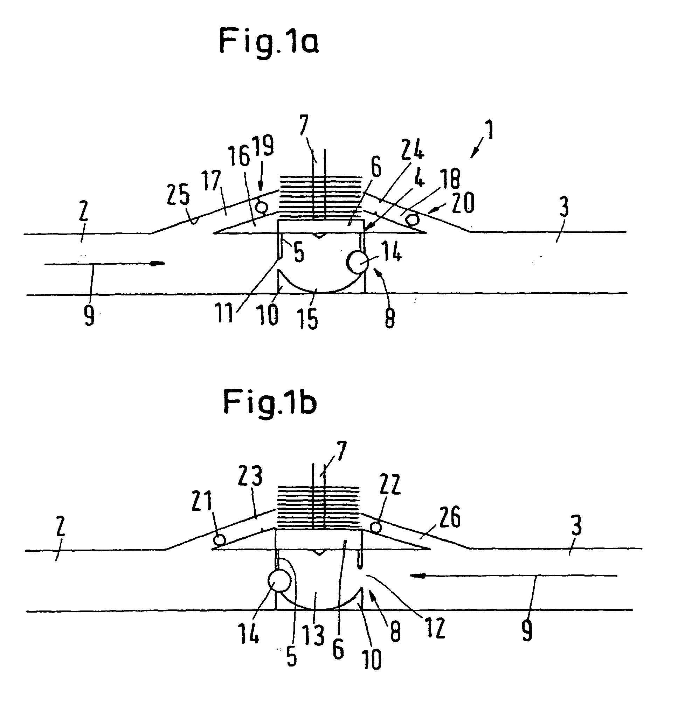

Fig. 1 zeigt schematisch ein Heizkörperventil 1 mit einem ersten Anschluß 2 und einem zweiten Anschluß 3. Zwischen den beiden Anschlüssen 2, 3 ist eine Absperreinrichtung 4 angeordnet, die einen Ventilsitz 5 und ein Ventilelement 6 aufweist, wobei das Ventilelement 6 durch ein nur schematisch dargestelltes Betätigungselement 7 auf den Ventilsitz 5 zu- oder von ihm wegbewegt werden kann, um den Strom einer Flüssigkeit von einem Anschluß 2 zum anderen Anschluß 3 zu steuern.

Bei einem derartigen Heizkörperventil 1 möchte man sicherstellen, daß das Ventilelement 6 immer durch den Ventilsitz 5 hindurch angeströmt wird. Normalerweise wird dies dadurch sichergestellt, daß man einen der beiden Anschlüsse 2, 3 als Einlaßanschluß und den anderen der beiden Anschlüsse 3, 2 als Auslaßanschluß definiert und den Weg der Flüssigkeit durch konstruktive Maßnahmen so festlegt, daß der Ventilsitz 5 von der dem Ventilelement 6 abgewandten Seite, die im folgenden als Rückseite bezeichnet wird, her angeströmt wird. In diesem Fall ergibt sich nämlich bei der zunehmenden Annäherung des Ventilelements 6 an den Ventilsitz 5 ein immer kleiner werdender Spalt, ohne daß das Ventilelement 6 durch eine Druckerhöhung auf seiner dem Ventilsitz 5 abgewandten Seite plötzlich auf dem Ventilsitz 5 herabgedrückt wird. Eine derartige Erscheinung könnte zu einem sogenannten "Wasserschlag" führen.

Bei dem vorliegenden Heizkörperventil 1 verzichtet man nun darauf, einen der beiden Anschlüsse 2,3 als Einlaßanschluß und den anderen als Auslaßanschluß festzulegen. Statt dessen verwendet man eine Richtungsventilanordnung 8, die dafür sorgt, daß zuströmende Flüssigkeit, die in Fig. 1 durch einen Pfeil 9 symbolisiert ist, immer von der Rückseite her den Ventilsitz 5 durchströmt.

Hierbei weist die Richtungsventilanordnung einen ersten Abschnitt auf, der in Strömungsrichtung vor dem Ventilsitz 5 liegt, und einen zweiten Abschnitt, der in Strömungsrichtung hinter dem Ventilsitz 5 liegt.

Der erste Abschnitt weist ein Ventilgehäuse 10 auf, das einen ersten Eingangskanal 11 und einen zweiten Eingangskanal 12 und dazwischen einen Raum 13 aufweist, in dem eine Kugel 14 beweglich ist. Die Kugel 14 kann die Mündung jeweils eines Eingangskanals 11, 12 in den Raum 13 abdecken und unter dem Druck der im Raum 13 anstehenden Flüssigkeit dicht verschließen. Dieser Druck ist der jeweils höhere Druck aus den beiden Anschlüssen 2, 3, also der Druck der zufließenden Flüssigkeit.

Der Boden des Raumes 13 weist eine Vertiefung 15 auf, in die die Kugel 14 hineinrollen kann, wenn keine Flüssigkeit ansteht. Dies wird vor der Montage der Fall sein.

In Strömungsrichtung hinter dem Ventilsitz 5 ist eine Ventilkammer 16 angeordnet, die über einen ersten Ausgangskanal 17 mit dem ersten Anschluß 2 und über einen zweiten Ausgangskanal 18 mit dem zweiten Anschluß 3 verbunden ist. In jedem Kanal 17, 18 ist ein Sperrventil 19, 20 angeordnet, das von der Ventilkammer 16 zu dem jeweils zugehörigen Anschluß 2, 3 hin öffnet. Jedes Sperrventil weist ein Sperrventilelement 21, 22 auf, das unter dem Druck der zufließenden Flüssigkeit 9 gegen einen Sperrventilsitz 23, 24 gedrückt werden kann. In die entgegengesetzte Richtung ist eine Bewegung durch eine Fangeinrichtung 25, 26 begrenzt.

Wenn nun Flüssigkeit 9 durch den ersten Anschluß 2 zuströmt, wird die Kugel 14 auf die Mündung des zweiten Eingangskanals 12 gedrückt, so daß die Flüssigkeit durch den ersten Eingangskanal 11 zur Rückseite des Ventilsitzes 5 gelangt. Gleichzeitig wird das Sperrventilelement 21 im ersten Ausgangskanal 17 gegen seinen Ventilsitz 23 gedrückt, so daß der erste Ausgangskanal 17 verschlossen ist. Wenn nun das Ventilelement 6 vom Ventilsitz 5 abgehoben wird, dann kann die Flüssigkeit 9 durch den Spalt zwischen dem Ventilsitz 5 und dem Ventilelement 6 in die Ventilkammer 16 strömen und von dort durch den zweiten Ausgangskanal 18 in den zweiten Anschluß 3. Das Sperrventil 22 ist dann vom Ventilsitz 24 abgehoben, wird aber an der Fangeinrichtung 26 gehalten.

Wenn die Strömungsrichtung der Flüssigkeit 9 umgekehrt ist (Fig. 1b) dann wird die Kugel 14 gegen die Mündung des ersten Eingangskanals 11 gedrückt und das zweite Sperrventil 20 geschlossen, während das erste Sperrventil 19 geöffnet wird.

Es reicht also aus, daß Heizkörperventil 1 zu montieren. Nach erfolgter Montage ist die richtige Anströmung des Ventilelementes 6 auf jeden Fall sichergestellt.

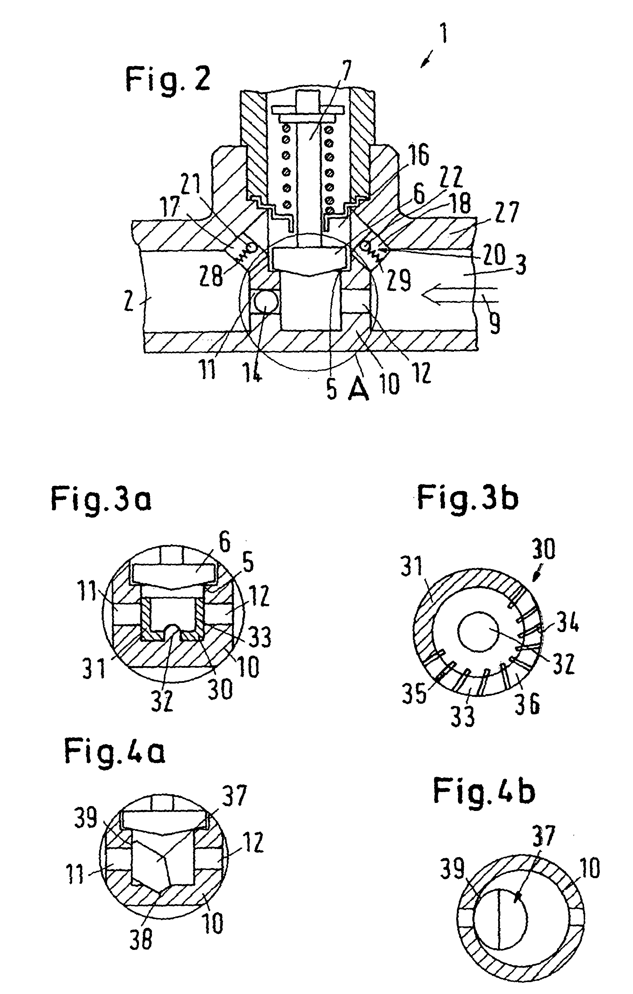

Während Fig. 1 lediglich eine schematische Darstellung eines Heizkörperventils zeigt, zeigt Fig. 2 eine konstruktive Ausgestaltung mit einem Gehäuse 27, das den Ventilsitz 5 bildet und gleichzeitig auch das Ventilgehäuse 10. Das Ventilgehäuse 10 kann aber vom Gehäuse 27 getrennt sein und beispielsweise als Einsatz ausgebildet sein. Gleiche Teile wie in Fig. 1 sind mit den gleichen Bezugszeichen versehen.

Die beiden Eingangskanäle 11, 12 haben nun eine konische Form. Wenn die Kugel 14 in die Mündung eines Eingangskanals 11, 12 hineingedrückt wird, dann klemmt sie dort fest, wie dies für den Eingangskanal 11 dargestellt ist. Auch dann, wenn sich die Druckverhältnisse kurzzeitig ändern oder sogar umkehren, verbleibt die Kugel 14 im ersten Eingangskanal 11. Die Ventilanordnung im ersten Abschnitt ist also sozusagen selbsthaltend ausgebildet.

Die Sperrventile in den beiden Ausgangskanälen 17, 18 sind als Rückschlagventile ausgebildet, d.h. die Sperrventilelemente 21, 22 sind durch Federn 28, 29 gegen ihre Ventilsitze gepreßt. Damit sind die beiden Ausgangskanäle 17, 18 im drucklosen Zustand, also bei Abwesenheit einer Druckdifferenz, geschlossen.

Die Funktionsweise ist im Grunde identisch zu der der Fig. 1. Die Kugel 14 wird durch die zuströmende Flüssigkeit 9 in den ersten Eingangskanal 11 gepreßt und versperrt den Weg der Flüssigkeit 9 durch diesen ersten Eingangskanal, so daß die Flüssigkeit 9 nunmehr lediglich durch den Ventilsitz 5 hindurch das Ventilelement 6 anströmen kann. Das Sperrventil 20 im zweiten Eingangskanal 18 ist geschlossen, so daß die Flüssigkeit über den ersten Eingangskanal 17 zum ersten Anschluß 2 gelangt.

Für die Ausgestaltung des Richtungsventils gibt es weitere Möglichkeiten.

Fig. 3 zeigt eine Ansicht, die der Ansicht A aus Fig. 2 entspricht und zwar in Fig. 3a in schematischer Schnittansicht und in Fig. 3b in Draufsicht.

Das Richtungsventil weist einen Drehschieber 30 auf, der einen geschlossenen Wandabschnitt 31 aufweist. Der geschlossene Wandabschnitt 31 erstreckt sich über einen Umfangswinkel von etwa 120°. Im übrigen weist der Drehschieber 30, der im Ventilgehäuse 10 um einen Zapfen 32 drehbar ist, einen durchlässigen Wandabschnitt 33 auf, der sich über etwa 240° erstreckt. Der durchlässige Wandabschnitt weist erste Antriebselemente 34 und zweite Antriebselemente 35 auf, die nach Art von Turbinenschaufeln ausgebildet sind. Hierbei bewirken die Antriebselemente 34 eine Drehung des Drehschiebers 30 entgegen dem Uhrzeigersinn (bezogen auf Fig. 3b) wenn sie von außen nach innen durchströmt werden, während die Antriebselemente 35 eine Drehung im Uhrzeigersinn bewirken, wenn sie von außen nach innen durchströmt werden. Vor der Montage des Heizkörperventils 1 ist der Drehschieber 30 so ausgerichtet, daß der Wandabschnitt 33 mit den ersten Antriebselementen 34 vor dem einen Eingangskanal 11 und mit den zweiten Antriebselementen vor dem zweiten Eingangskanal 12 liegt. Wenn nun Flüssigkeit durch einen der beiden Eingangskanäle 11, 12 strömt, beispielsweise durch den Eingangskanal 12, dann wird der Drehschieber solange in Richtung des Uhrzeigersinns gedreht, bis eine neutrale Zone 36 zwischen den beiden Antriebselementen 34, 35 in der Mitte der Mündung des zweiten Eingangskanals 12 liegt und die Wirkung der zuströmenden Flüssigkeit auf die ersten und auf die zweiten Antriebselemente 34, 35 gleich ist und sich gegenseitig aufhebt. In dieser Position ist aber der geschlossene Wandabschnitt 31 so angeordnet, daß er die Mündung des ersten Eingangskanals 11 versperrt.

Fig. 4 zeigt eine weitere Ausgestaltung, bei der das Verschlußelement als Klappe 37 ausgebildet ist, die um eine Achse 38 verschwenkbar ist. Die Klappe 37 hat im Querschnitt eine rautenartige Ausbildung, so daß sie mit einer ebenen bzw. zylindermantelartigen Dichtfläche 39 den ersten Eingangskanal 11 abdecken kann, wenn die Flüssigkeit durch den zweiten Eingangskanal 12 zuströmt, wie dies in Fig. 4 dargestellt ist.

Von den dargestellten Ausführungsformen kann in vielerlei Hinsicht abgewichen werden. So können die Sperrventile 19, 20 auch durch federbelastete oder schwerkraftgesteuerte Klappen gebildet werden. Anstelle einer Kugel 14 kann man auch andere Verschlußelemente verwenden.

## Patentansprüche

1. Ventil, insbesondere Heizkörperventil, mit einem Gehäuse, das einen ersten Anschluß und einen zweiten Anschluß aufweist, wobei im Strömungsweg zwischen diesen beiden Anschlüssen eine Absperreinrichtung mit einem Ventilsitz und einem damit zusammenwirkenden Ventilelement angeordnet ist, **dadurch gekennzeichnet, daß** eine flüssigkeitsbetätigte Richtungsventilanordnung (8) vorgesehen ist, die zufließende Flüssigkeit (9) von der dem Ventilelement (6) abgewandten Seite durch den Ventilsitz (5) leitet.

2. Ventil nach Anspruch 1, **dadurch gekennzeichnet, daß** die Richtungsventilanordnung (8) einen ersten Abschnitt in Strömungsrichtung vor dem Ventilsitz (5) und einen zweiten Abschnitt in Strömungsrichtung hinter dem Ventilsitz (5) aufweist.

3. Ventil nach Anspruch 2, **dadurch gekennzeichnet, daß** der erste Abschnitt zwei Eingangskanäle (11, 12) aufweist, von denen jeder einen Anschluß (2, 3) mit der dem Ventilelement (6) abgewandten Seite des Ventilsitzes (5) verbindet, wobei ein Verschlußelement (14, 30, 37) vorgesehen ist, das unter der Wirkung der Flüssigkeit (9) einen der beiden Eingängskanäle (11, 12) verschließt.

4. Ventil nach Anspruch 3, **dadurch gekennzeichnet, daß** sich das Verschlußelement (14, 30, 37) zumindest vor der ersten Inbetriebnahme in einer Neutralstellung befindet, in der beide Eingangskanäle (11, 12) geöffnet sind.

5. Ventil nach Anspruch 4, **dadurch gekennzeichnet, daß** das Verschlußelement (14, 30) nach der ersten Betätigung in seiner Schließlage festgelegt ist.

6. Ventil nach einem der Ansprüche 3 bis 5, **dadurch gekennzeichnet, daß** das Verschlußelement (14) als Kugel ausgebildet ist, die in eine konische Mündung eines der Eingangskanäle (11, 12) klemmbar ist.

7. Ventil nach einem der Ansprüche 3 bis 5, **dadurch gekennzeichnet, daß** das Verschlußelement (30) als Drehschieber ausgebildet ist, der einen geschlossenen und einen durchlässigen Wandabschnitt (31, 33) aufweist, wobei der durchlässige Wandabschnitt (33) turbinenschaufelartige Antriebselemente (34, 35) aufweist, die in zwei Abschnitten unterschiedliche Antriebsrichtungen aufweisen und in einer Neutralzone (36) zusammentreffen, die dem geschlossenen Wandabschnitt (31) gegenüberliegt.

8. Ventil nach einem der Ansprüche 3 bis 5, **dadurch gekennzeichnet, daß** das Verschlußelement (37) als Klappe ausgebildet ist.

9. Ventil nach einem der Ansprüche 2 bis 8, **dadurch gekennzeichnet, daß** der zweite Abschnitt zwei Ausgangskanäle (17, 18) aufweist, die jeweils eine Ventilkammer (16) auf der dem Ventilelement (6) zugewandten Seite des Ventilsitzes (5) mit einem der beiden Anschlüsse (2, 3) verbinden, wobei in jedem Kanal (17, 18) ein in Richtung des jeweiligen Anschlusses (2, 3) öffnendes Sperrventil (19, 20) angeordnet ist.

10. Ventil nach Anspruch 9, **dadurch gekennzeichnet, daß** Da das Sperrventil (19, 20) als Rückschlagventil ausgebildet ist.

11. Ventil nach Anspruch 9, **dadurch gekennzeichnet, daß** das Rückschlagventil eine Schließfeder (28, 29) aufweist.

12. Ventil nach einem der Ansprüche 9 bis 11, **dadurch gekennzeichnet, daß** das Sperrventil (19, 20) eine Fangeinrichtung (25, 26) für ein Sperrventilelement (21, 22) aufweist.

## Claims

1. Valve, particularly radiator valve with a housing having a first connection and a second connection, a shut-off device with a valve seat and a valve element interacting with said valve seat being located in the flow path between said connections, **characterised in that** a flow-activated directional valve arrangement (8) is provided, which leads incoming fluid (9) from the side facing away from the valve element (6) through the valve seat (5).

2. Valve according to claim 1, **characterised in that** the directional valve arrangement (8) has a first section in the flow direction before the valve seat (5) and a second section in the flow direction after the valve seat (5).

3. Valve according to claim 2, **characterised in that** the first section has two inlet channels (11, 12), each being connected with the side of the valve seat (5) facing away from the valve element (6) by a connection (2, 3), a closure element (14, 30, 37) being provided, which closes one of the two inlet channels (11, 12) under the influence of the fluid (9).

4. Valve according to claim 3, **characterised in that** at least before the first start-up the closure element (14, 30, 37) is in a neutral position, in which the two inlet channels (11, 12) are open.

5. Valve according to claim 4, **characterised in that** after the first actuation, the closure element (14, 30) is fixed in its closing position.

6. Valve according to one of the claims 3 to 5, **characterised in that** the closure element (14) has the shape of a ball, which can be jammed in a conical opening of one of the inlet channels (11, 12).

7. Valve according to one of the claims 3 to 5, **characterised in that** the closure element (30) has the shape of a rotary slide having a closed and a penetrable wall section (31, 33), the penetrable wall section (33) having vane-like driving elements (34, 35), having in two sections different driving directions and meeting in a neutral zone (36), which is opposite to the closed wall section (31).

8. Valve according to one of the claims 3 to 5, **characterised in that** the closure element (37) has the shape of a flap.

9. Valve according to one of the claims 2 to 8, **characterised in that** the second section has two outlet channels (17, 18), each connecting a valve chamber 6 on the side of valve seat (5) facing the valve element (6) with one of the two connections (2, 3), each channel (17, 18) having a stop valve (19, 20) opening in the direction of the connection (2, 3) in question.

10. Valve according to claim 9, **characterised in that** the stop valve (19, 20) is made as a non-return valve.

11. Valve according to claim 9, **characterised in that** the non-return valve has a closing spring (28, 29).

12. Valve according to one of the claims 9 to 11, **characterised in that** the stop valve (19, 20) has a catch arrangement (25, 26) for a stop valve element (21, 22).

## Revendications

1. Robinet, en particulier robinet de radiateur, comportant un logement, qui présente un premier raccordement et un second raccordement, dans lequel dans la voie d'écoulement entre ces deux raccordements est disposé un dispositif d'arrêt avec un siège de robinet et un élément de robinet coopérant avec celui-ci, **caractérisé en ce qu'**il est prévu un agencement de robinet directionnel (8) actionné par le liquide, qui guide le liquide d'arrivée (9) en provenance du côté détourné de l'élément de robinet (6) à travers le siège de robinet (5).

2. Robinet selon la revendication 1, **caractérisé en ce que** l'agencement de robinet directionnel (8) présente un premier tronçon dans la direction d'écoulement devant le siège de robinet (5) et un second tronçon dans la direction d'écoulement derrière le siège de robinet (5).

3. Robinet selon la revendication 2, **caractérisé en ce que** le premier tronçon présente deux canaux d'entrée (11,12), dont chacun relie un raccordement (2,3) avec le côté détourné du siège de robinet (5) de l'élément de robinet (6), dans laquelle il est prévu un élément de fermeture (14,30,37) qui, sous l'action du liquide (9), ferme l'un des deux canaux d'entrée (11,12).

4. Robinet selon la revendication 3, **caractérisé en ce que** l'élément de fermeture (14,30, 37) au moins devant la première mise en service se trouve dans une position neutre, dans laquelle les deux canaux d'entrée (11,12) sont ouverts.

5. Robinet selon la revendication 4, **caractérisé en ce que** l'élément de fermeture (14,30) est fixé dans sa position de fermeture après le premier actionnement.

6. Robinet selon l'une des revendications 3 à 5, **caractérisé en ce que** l'élément de fermeture (14) a la configuration d'une sphère, qui peut venir se caler contre une ouverture conique de l'un des canaux d'entrée (11,12).

7. Robinet, selon l'une des revendications 3 à 5, **caractérisé en ce que** l'élément de fermeture (30) est conçu en tant que tiroir rotatif qui présente un tronçon de paroi fermé et un tronçon de paroi perméable (31,33), dans lequel le tronçon de paroi perméable (33) présente des éléments d'entraînement (34,35) du type aubes de turbine, qui dans deux tronçons présentent des directions d'entraînement différentes et qui coïncident dans une zone neutre (36) opposée au tronçon de paroi fermé (31).

8. Robinet selon l'une des revendications 3 à 5, **caractérisé en ce que** l'élément de fermeture (37) est conçu en tant que clapet.

9. Robinet selon l'une des revendications 2 à 8, **caractérisé en ce que** le second tronçon présente deux canaux de sortie (17,18) qui relient respectivement une chambre de robinet (16) sur le côté dirigé vers l'élément de robinet (6) du siège de robinet (5) avec l'un des deux raccordements (2,3), dans lequel dans chaque canal (17,18) est agencée un robinet d'arrêt (19,20) s'ouvrant dans la direction du raccordement respective (2,3).

10. Robinet selon la revendication 9, **caractérisé en ce que** le robinet d'arrêt (19,20) est conçu en tant que robinet de non-retour.

11. Robinet selon la revendication 9, **caractérisé en ce que** le robinet de non-retour présente un ressort de fermeture (28,29).

12. Robinet selon l'une des revendications 9 à 11, **caractérisé en ce que** le robinet d'arrêt (19,30) présente un dispositif de blocage (25,26) pour un élément de robinet d'arrêt (21,22).
